(19)

Europäisches
Patentamt
European
Patent Office
Office européen
des brevets

(11) **EP 3 674 210 A1**

(12) **EUROPEAN PATENT APPLICATION**
published in accordance with Art. 153(4) EPC

(43) Date of publication:
**01.07.2020 Bulletin 2020/27**

(21) Application number: **17925187.1**

(22) Date of filing: **18.09.2017**

(51) Int Cl.:
**B64C 27/08** (2006.01)  **H04N 5/232** (2006.01)

(86) International application number:
**PCT/CN2017/102081**

(87) International publication number:
**WO 2019/051832 (21.03.2019 Gazette 2019/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **SZ DJI Technology Co., Ltd.
Shenzhen, Guangdong 518057 (CN)**

(72) Inventors:
• **WU, Di
Shenzhen
Guangdong 518057 (CN)**
• **TANG, Ketan
Shenzhen
Guangdong 518057 (CN)**

(74) Representative: **Goddar, Heinz J.
Boehmert & Boehmert
Anwaltspartnerschaft mbB
Pettenkoferstrasse 22
80336 München (DE)**

(54) **MOVABLE OBJECT CONTROL METHOD, DEVICE AND SYSTEM**

(57)    The present disclosure provides a method, apparatus, and system for controlling a mobile object. The method comprises obtaining a marker in an image captured by a photographing device, determining position-attitude information of the photographing device relative to the marker, and controlling the mobile object according to the position-attitude information of the photographing device relative to the marker. Since the position-attitude information of the photographing device relative to the marker can be precisely determined, a precise control of the mobile object can be realized when the mobile object is controlled according to the position-attitude information of the photographing device relative to the marker.

FIG. 1

## Description

TECHNICAL FIELD

The present disclosure generally relates to the field of unmanned aerial vehicle (UAV) and, more particularly, to a method for controlling a mobile object, and an apparatus and system thereof.

BACKGROUND

In conventional technologies, the control method of a UAV includes the remote control, the mobile application (App) control, and the motion sensing control. The motion sensing control refers to that a user holds a handheld device having a build-in Inertial Measurement Unit (IMU) that senses the movement of the user's hand and converts movement information of the user's hand into control commands of the UAV for being sent to the UAV to realize the control of the UAV.

However, the motion sensing control mode can only control the UAV to perform certain fuzzy actions in a large region but cannot precisely control the UAV.

SUMMARY

The disclosed embodiments provide a method, apparatus, and system for controlling a mobile object, such that an unmanned aerial vehicle (UVA) can be precisely controlled.

One aspect of the present disclosure provides the method for controlling the mobile object comprising obtaining a marker in an image captured by a photographing device, determining position-attitude information of the photographing device relative to the marker, and controlling the mobile object according to the position-attitude information of the photographing device relative to the marker.

Second aspect of the present disclosure provides a terminal device comprising one or more processors being configured to obtain a marker in an image captured by a photographing device, determine position-attitude information of the photographing device relative to the marker, and control the mobile object according to the position-attitude information of the photographing device relative to the marker.

Third aspect of the present disclosure provides a UAV comprising a fuselage, a power system provided on the fuselage and configured to provide a power for flight, and an electronic governor communicatively connected to the power system and configured to control a flight of the UAV.

Fourth aspect of the present disclosure provides the system for controlling the mobile object comprising the terminal device provided by the second aspect of the present disclosure and the UAV provided by the third aspect of the present disclosure.

According to the method, apparatus, and system for controlling the mobile object provided by the present disclosure, the position-attitude information of the photographing device relative to the marker can be determined by obtaining the marker in the image captured by the photographing device, and the mobile object can be controlled according to the position-attitude information of the photographing device relative to the marker. Since the position-attitude information of the photographing device relative to the marker can be precisely determined, the precise control of the mobile object can be realized when the mobile object is controlled according to the position-attitude information of the photographing device relative to the marker.

BRIEF DESCRIPTION OF THE DRAWINGS

In order to provide a clearer illustration of technical schemes of disclosed embodiments or conventional technologies, the drawings used in the description of the disclosed embodiments or the conventional technologies are briefly described below. It is apparent that the following drawings are merely some embodiments of the present disclosure. Other drawings may be obtained based on the disclosed drawings by those skilled in the art without creative efforts.

FIG. 1 is a flow chart of a method for controlling a mobile object according to an embodiment of the present disclosure.

FIG. 2 is a schematic diagram of a system for controlling a mobile object according to an embodiment of the present disclosure.

FIG. 3 is a schematic diagram of a user interface of a terminal device according to an embodiment of the present disclosure.

FIG. 4 is a schematic diagram of another user interface of the terminal device according to an embodiment of the present disclosure.

FIG. 5 is a flow chart of a method for controlling a mobile object according to another embodiment of the present disclosure.

FIG. 6 is a flow chart of a method for controlling a mobile object according to another embodiment of the present disclosure.

FIG. 7 is a schematic diagram showing a terminal device moving relative to a user's face according to an embodiment of the present disclosure.

FIG. 8 is another schematic diagram showing the terminal device moving relative to the user's face according to an embodiment of the present disclosure.

FIG. 9 is another schematic diagram showing the terminal device moving relative to the user's face according to an embodiment of the present disclosure.

FIG. 10 is a schematic diagram of another user interface of the terminal device according to an embodiment of the present disclosure.

FIG. 11 is a structural diagram of a terminal device according to an embodiment of the present disclosure.

FIG. 12 is a structural diagram of an unmanned aerial vehicle (UAV) according to an embodiment of the present disclosure.

Description of Reference Numerals

20 - terminal device

21 - UAV

22 - photographing device

23 - gimbal

30 - image

31 - general marker

70 - direction

80 - direction

110 - terminal device

111 - processor

100 - UAV

107 - motor

106 - propeller

117 - electronic governor

118 - flight controller

108 - sensing system

110 - communication system

102 - support system

104 - photographing device

112 - ground station

114 - antenna

116 - electromagnetic wave

DETAILED DESCRIPTION OF EMBODIMENTS

Technical schemes of the disclosed embodiments will be clearly described below with reference to the drawings. It will be appreciated that the described embodiments are some rather than all of the embodiments of the present disclosure. Other embodiments conceived by those having ordinary skills in the art on the basis of the disclosed embodiments without inventive efforts should fall within the scope of the present disclosure.

It should be noted that when a component is referred to as "fixed to" another component, the component may be directly attached to the another component or there may be one other component provided between them. When a component is referred to as "connected to" another component, the component may be directly connected to the another component or there may be one other component provided between them.

Unless otherwise defined, all the technical and scientific terms used herein have the same meanings as generally understood by one of ordinary skill in the art. As described herein, the terms used in the specification of the present disclosure are intended to describe exemplary embodiments, rather than limiting the present disclosure. The term "and/or" used herein includes any and all combination of one or more related items listed.

Hereinafter, embodiments of the present disclosure will be described in detail with reference to the drawings. In the situation of no conflict, the embodiments and features of the embodiments can be combined.

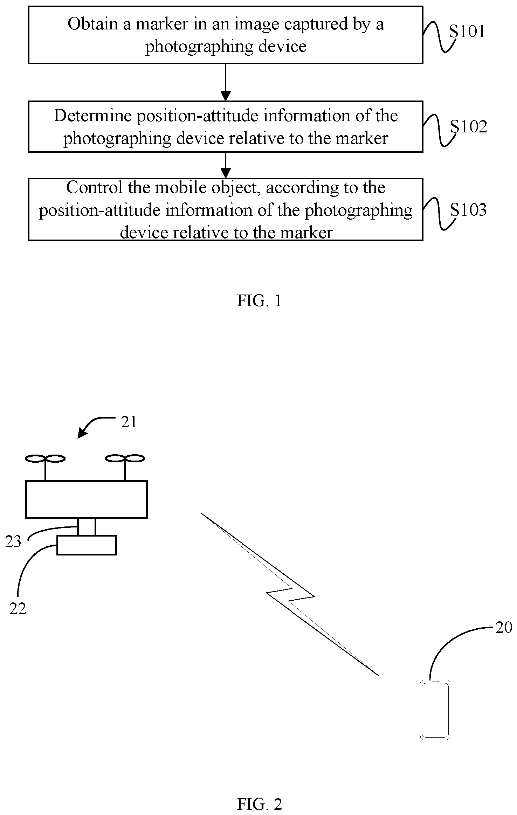

A method for controlling a mobile object is provided according to an embodiment of the present disclosure. FIG. 1 is a flow chart of the method for controlling the mobile object according to the embodiment of the present disclosure. As shown in FIG. 1, the method according to the embodiment includes the following steps.

Step S101, a marker in an image captured by a photographing device is obtained.

The method for controlling the mobile object according to the embodiment can be applied to a system for controlling the mobile object shown in FIG. 2. The mobile object can be an unmanned aerial vehicle (UAV). As shown in FIG. 2, the system for controlling the mobile object includes a terminal device 20 and the mobile object. The mobile object can specifically be a UAV 21. The UAV 21 carries a photographing device 22. Specifically, the UAV 21 carries the photographing device 22 via a gimbal 23. The terminal device 20 can be a handheld device, such as a mobile terminal, a tablet, or the like. The terminal device 20 can have a photographing function. Specifically, the terminal device 20 includes a front-facing camera and/or a rear-facing camera. The front-facing camera and/or rear-facing camera are configured to capture images. A user can hold the terminal device 20 and take selfies using the front-facing camera of the terminal device 20, or shoot other images using the rear-facing camera of the terminal device 20. The user can preview the images captured by the terminal device 20 through a screen of the terminal device 20.

The front-facing camera or the rear-facing camera of the terminal device 20 can capture images of a current scene in real time. Furthermore, the terminal device 20 can detect a marker in the image captured by the front-facing camera or the rear-facing camera. The marker can be a preset marker or a general marker. The preset marker can include at least one of a human face, a two-dimensional barcode, an AprilTag, or another marker with a specific model. The human face is the most common marker. The general marker can be a static object in the image, such as a tree, a car, a building, or the like. The difference between the preset marker and general marker is that the preset marker has a specific model and the general marker has no specific model.

For example, when the user holds the terminal device 20 and takes selfies using the front-facing camera of the terminal device 20, the front-facing camera of the terminal device 20 can capture images of the user's face in real time. The terminal device 20 can identify the face in the image using face recognition technologies. As another example, image information or video data captured by the photographing device 22 carried by the UAV 21 can be wirelessly transmitted to the terminal device 20 via a communication system of the UAV 21. The user can view the image information or video data captured by the photographing device 22 through the terminal device 20. When the user is viewing the image information or the video data captured by the photographing device 22, the front-facing camera of the terminal device 20 may face the user's face, and the front-facing camera of the terminal device 20 can capture images of the user's face in real time. Furthermore, the terminal device 20 can identify the face in the image using the face recognition technologies. Specifically, because the human face has expressed features, the terminal device 20 can detect the key fixation points of the face in the image, such as the eyes, the nose, the eyebrows, the mouth, or the like, such that the face in the image can be identified through the key fixation points in the image.

Specifically, acquiring the marker in the image captured by the photographing device includes the following approaches.

One approach is to obtain the marker selected by the user in the image captured by the photographing device. Obtaining the marker selected by the user in the image captured by the photographing device 22 includes at least one of the followings: obtaining the marker selected by the user through drawing a box in the image captured by the photographing device 22, or obtaining the marker selected by the user through clicking the image captured by the photographing device 22.

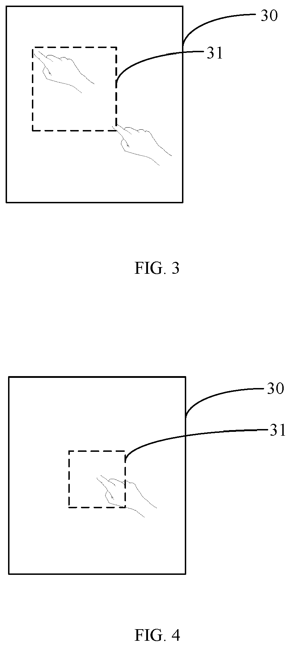

Because there is no specific model for the general marker, the terminal device 20 can obtain the marker selected by the user in the image captured by the terminal device 20. As shown in FIG. 3, an image 30 is captured by the terminal device 20. The image 30 includes a general marker 31. When the terminal device 20 displays the image 30, the user can draw a box, shown as dotted lines in FIG.3, to select the general marker 31. Alternatively, as shown in FIG. 4, the user can click the image 30 to select the general marker 31.

Another approach is to obtain the marker, in the image captured by the photographing device, that matches a preset reference image. For example, the terminal device 20 can prestore the reference image, such as a reference image of two-dimensional barcode, a reference image of AprilTag, or the like. After a camera of the terminal device 20 captures the image of the current scene, the terminal device 20 detects whether there is a two-dimension barcode in the image matching the prestored reference image of two-dimensional barcode or an AprilTag in the image matching the prestored reference image of AprilTag, and set an icon matched successfully as the marker.

Alternatively, the terminal device 20 can prestore a reference image of a general marker, such as a tree, a car, a building, or the like. After the camera of the terminal device 20 captures the image of the current scene, the terminal device 20 detects whether there is a marker in the image that matches the prestored reference image such as the tree, the car, the building, or the like.

Another approach is to obtain the marker including a preset number of feature points in the image captured by the photographing device. For the general marker, the terminal device 20 can detect the feature points in the image. If the number of the feature points reaches the preset number and a position relationship between the feature points satisfies the preset position relationship, the terminal device 20 can detect the general marker formed by the preset number of feature points.

Step S102, position-attitude information of the photographing device relative to the marker is determined.

After detecting the marker according to the above steps, the terminal device 20 can further determine the position-attitude information of the terminal device 20 relative to the marker. The position-attitude information can include at least one of the followings: position information or attitude information. The attitude information can include at least one of the followings: a pitch angle, a roll angle, or a yaw angle.

Specifically, determining the position-attitude information of the photographing device relative to the marker can include: determining position-attitude information of the marker in the image captured by the photographing device, and determining the position-attitude information of the photographing device relative to the marker according to the position-attitude information of the marker in the image captured by the photographing device.

Determining the position-attitude information of the marker in the image captured by the photographing device can include: according to coordinates of one or more key points of the marker in the image captured by the photographing device, determining the position-attitude information of the marker in the image captured by the photographing device.

For example, the marker can be a user's face. After detecting the key fixation points of the human face in the image captured by the front-facing camera in real time, the terminal device 20 can determine position-attitude information of the human face in the image, specifically including position information and attitude information of the human face in the image, according to the coordinates of the key fixation points of the human face in the image. The terminal device 20 can further determine the position-attitude information of the terminal device 20 relative to the human face, according to the position-attitude information of the human face in the image. For example, if the human face is in the right part of the image, the terminal device 20 can be determined to be on the left side of the human face.

As another example, the marker can be a general marker. After the terminal device 20 detects feature points of the general marker in the image captured by the rear-facing camera in real time, simultaneous location and mapping (SLAM) method can be used to estimate position-attitude information of the feature points, and the position-attitude information of the feature points can be used as the position-attitude information of the general marker in the image. The terminal device 20 can further determine the position-attitude information of the terminal device 20 relative to the general marker, according to the position-attitude information of the general marker in the image. For example, if the general marker is in the left part of the image, the terminal device 20 can be determined to be on the right side of the general marker. If the general marker is in the right part of the image, the terminal device 20 can be determined to be on the left side of the general marker.

Step S103, the mobile object is controlled according to the position-attitude information of the photographing device relative to the marker.

Specifically, the terminal device 20 can control the UAV 21, according to the position-attitude information of the terminal device 20 relative to the marker. For example, the terminal device 20 can control a position of the UAV 21 according to the position information of the terminal device 20 relative to the marker, or can control an attitude of the UAV 21 according to the attitude information of the terminal device 20 relative to the marker.

Without loss of generality, controlling the mobile object according to the position-attitude information of the photographing device relative to the marker can include the following feasible implementation manners.

One feasible implementation manner is to control position information of the mobile object relative to a preset origin, according to the position information of the photographing device relative to the marker. Controlling the position information of the mobile object relative to the preset origin according to the position information of the photographing device relative to the marker can include: controlling a distance of the mobile object relative to the preset origin according to a distance of the photographing device relative to the marker.

For example, the terminal device 20 can control position information of the UAV 21 relative to the preset origin, according to the position information of the terminal device 20 relative to the marker. The preset origin can be a current return point of the UAV 21, an initial return point of the UAV 21, or a preset point in a geographic coordinate system. The embodiment does not limit a specific preset origin.

For example, the terminal device 20 can generate a control command for controlling the UAV 21, according to the distance of the terminal device 20 relative to the marker. The control command is configured to control the distance of the UAV 21 relative to the preset origin. Optionally, the distance of the terminal device 20 relative to the marker can be L1, and the terminal device 20 can control the distance of the UAV 21 relative to the preset origin to be L2. The embodiment does not limit the relationship between L1 and L2. For example, the terminal device 20 is at a distance of 1 meter relative to the marker, and the terminal device 20 can control the UAV 21 to be at a distance of 100 meters relative to the preset origin. The terminal device 20 can send the control command to the UAV 21. The control command can include distance information of 100 meters. After the UAV 21 receives the control command, the UAV 21 can adjust the distance between the UAV 21 and the preset origin according to the control command.

Another feasible implementation manner is to control attitude information of the mobile object, according to the attitude information of the photographing device relative to the marker. Controlling the attitude information of the mobile object according to the attitude information of the photographing device relative to the marker can include: controlling a pitch angle of the mobile object according to a pitch angle of the photographing device relative to the marker, controlling a roll angle of the mobile object according to a roll angle of the photographing device relative to the marker, and controlling a yaw angle of the mobile object according to a yaw angle of the photographing device relative to the marker.

For example, the terminal device 20 can control attitude information of the UAV 21, according to the attitude information of the terminal device 20 relative to the marker. Optionally, the terminal device 20 can control a pitch angle of the UAV 21, according to the pitch angle of the terminal device 20 relative to the marker. The terminal device 20 can control a roll angle of the UAV 21, according to the roll angle of the terminal device 20 relative to the marker. The terminal device 20 can control a yaw angle of the UAV 21, according to the yaw angle of the terminal device 20 relative to the marker. For example, the pitch angle of the terminal device 20 relative to the marker is $\alpha 1$, the terminal device 20 can control the pitch angle of the UAV 21 to be $\alpha 2$. The embodiment does not limit the relationship between $\alpha 1$ and $\alpha 2$. Optionally, the relationship between $\alpha 1$ and $\alpha 2$ can be a preset proportional relationship.

Another feasible implementation manner is to control a moving speed of the mobile object, according to the attitude information of the photographing device relative to the marker. Controlling the moving speed of the mobile object according to the attitude information of the photographing device relative to the marker can include: controlling a speed at which the mobile object moves along the Y-axis of the ground coordinate system, according to the pitch angle of the photographing device relative to the marker, controlling a speed at which the mobile object moves along the X-axis of the ground coordinate system, according to the roll angle of the photographing device relative to the marker, and controlling a speed at which the mobile object moves along the Z-axis of the ground coordinate system, according to the yaw angle of the photographing device relative to the marker.

For example, the terminal device 20 can control a moving speed of the UAV 21, according to the attitude information of the terminal device 20 relative to the marker. Optionally, the terminal device 20 can control a speed at which the UAV 21 moves along the Y-axis of the ground coordinate system, according to the pitch angle of the terminal device 20 relative to the marker. The terminal device 20 can control a speed at which the UAV 21 moves along the X-axis of the ground coordinate system, according to the roll angle of the terminal device 20 relative to the marker. The terminal device 20 can control a speed at which the UAV 21 moves along the Z-axis of the ground coordinate system, according to the yaw angle of the terminal device 20 relative to the marker. These are merely a schematic illustration, and do not intend to limit the correspondence between the attitude angle and the moving direction.

In the embodiment, the position-attitude information of the photographing device relative to the marker can be determined by obtaining the marker in the image captured by the photographing device, and the mobile object can be controlled according to the position-attitude information of the photographing device relative to the marker. Since the position-attitude information of the photographing device relative to the marker can be precisely determined, the precise control of the mobile object can be realized when the mobile object is controlled according to the position-attitude information of the photographing device relative to the marker.

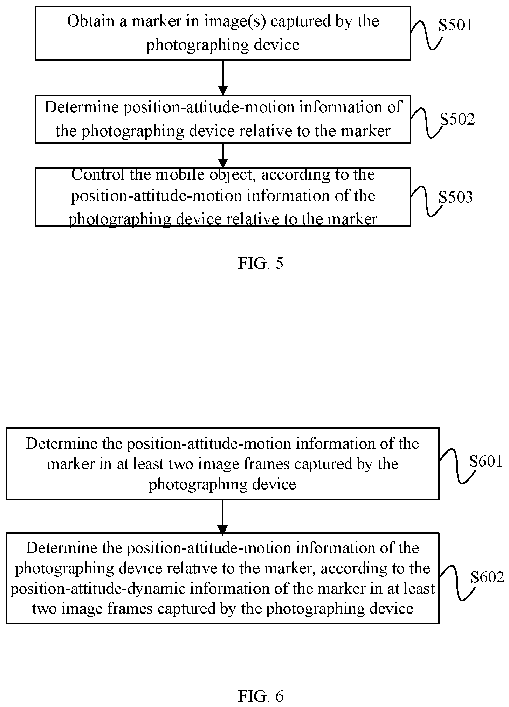

A method for controlling a mobile object is provided according to an embodiment of the present disclosure. FIG. 5 is a flow chart of the method for controlling the mobile object according to another embodiment the present disclosure. As shown in FIG. 5, based on the embodiment shown in FIG. 1, the method in this embodiment includes the following steps.

Step S501, a marker in image(s) captured by the photographing device is obtained.

The principle and implementation of step S501 and step S101 are similar, description of which is omitted here.

Step S502, position-attitude-motion information of the photographing device relative to the marker is determined.

In the embodiment, after the terminal device 20 detects the marker, the position-attitude-motion information of the terminal device 20 relative to the marker can be further determined. The position-attitude-motion information can include at least one of the followings: position-change information or attitude-change information. For example, the marker can be a user's face. The front-facing camera of the terminal device 20 can face the user's face and capture images including the user's face in real time. Assume that the user's face is not moving and the user moves the terminal device 20. The user's face moving toward the right in the images indicates that the terminal device 20 is moving toward left relative to the user's face. As another example, the marker can be a general marker. The rear-facing camera of the terminal device 20 faces the general marker and captures images including the general marker in real time. Assume that the general marker is not moving and the user moves the terminal device 20. The general marker moving toward the right in the images indicates that the terminal device 20 is moving toward left relative to the general marker. Similarly, a change of attitude of the terminal device 20 relative to the marker can also be determined. It can be appreciated that the terminal device 20 can detect the marker in the images captured by the front-facing camera or the rear-facing camera in real time and determine the change of position or the change of attitude of the marker in the images. Furthermore, the terminal device 20 can deduce the change of position of the terminal device 20 relative to the marker, according to the change of the position of the marker in the images, or can deduce the change of attitude of the terminal device 20 relative to the marker, according to the change of the attitude of the marker in the images.

Step S503, the mobile object is controlled according to the position-attitude-motion information of the photographing device relative to the marker.

Furthermore, the terminal device 20 can also map the change of position of the terminal device 20 relative to the marker into a control command for controlling the UAV 21 or map the change of attitude of the terminal device 20 relative to the marker into a control command for controlling the UAV 21, and send the control command to the UAV 21.

Specifically, controlling the mobile object according to the position-attitude-motion information of the photographing device relative to the marker can include the following several possible situations.

One possible situation is to control the position-change information of the mobile object relative to a preset origin, according to the position-change information of the photographing device relative to the marker.

For example, when the terminal device 20 is moving toward the left relative to the user's face, the terminal device 20 can control the UAV 21 to move toward the left relative to the preset origin or move toward the right relative to the preset origin. As another example, when the terminal device 20 is moving toward the right relative to the general marker, the terminal device 20 can control the UAV 21 to move toward the right relative to the preset origin or move toward the left relative to the preset origin. The preset origin can be a current return point of the UAV 21, an initial return point of the UAV 21, or a preset point in a geographic coordinate system. The embodiment does not limit a specific preset origin.

Another possible situation is to control the attitude-change information of the mobile object relative to the preset origin, according to the attitude-change information of the photographing device relative to the marker.

Assume that the marker is not moving. A change of attitude of the terminal device 20 relative to the marker can be a change of pitch angle of the terminal device 20 relative to the marker, such as a pitch angular velocity, a change of roll angle of the terminal device 20 relative to the marker, such as a roll angular velocity, or a change of yaw angle of the terminal device 20 relative to the marker, such as a yaw angular velocity. Optionally, the terminal device 20 can control a pitch angular velocity of the UAV 21 relative to the preset origin, according to the pitch angular velocity of the terminal device 20 relative to the marker. The terminal device 20 can control a roll angular velocity of the UAV 21 relative to the preset origin, according to the roll angular velocity of the terminal device 20 relative to the marker. The terminal device 20 can control a yaw angular velocity of the UAV 21 relative to the preset origin, according to the yaw angular velocity of the terminal device 20 relative to the marker.

In the embodiment, the position-change information or the attitude-change information of the photographing device relative to the marker can be determined by obtaining the marker in the images captured by the photographing device, and the change of position of the mobile object can be controlled according to the position-change information of the photographing device relative to the marker, or the change of attitude of the mobile object can be controlled according to the attitude-change information of the photographing device relative to the marker. Since the position-change information or the attitude-change information of the photographing device relative to the marker can be precisely determined, the mobile object can be precisely controlled according to the position-change information or the attitude-change information of the photographing device relative to the marker.

A method for controlling a mobile object is provided according to an embodiment of the present disclosure. FIG. 6 is a flow chart of the method for controlling the mobile object according to another embodiment the present disclosure. As shown in FIG. 6, on the basis of the embodiment shown in FIG. 5, the method for determining the position-attitude-motion information of the photographing device relative to the marker in step S502 can specifically include the following several feasible implementation manners.

The first feasible implementation manner includes the following steps as shown in FIG. 6.

Step S601, the position-attitude-motion information of the marker in at least two image frames captured by the photographing device is determined.

Specifically, determining the position-attitude-motion information of the marker in the at least two image frames captured by the photographing device can include: according to first coordinates of one or more key points of the marker in a first image captured by the photographing device and second coordinates of the one or more key points of the marker in a second image captured by the photographing device, a correlation matrix between the first image and the second image can be determined. According to the correlation matrix between the first image and the second image, the position-attitude-motion information of the marker in the first image and the second image can be determined.

For example, the marker can be a user's face. The front-facing camera of the terminal device 20 can capture the images including the user's face in real time. The terminal device 20 can obtain a plurality of two-dimensional key points of the human face in the image, denoted as $\overline{u}_i = (u_i, v_i), i = 1,2,3......n$, through a face detection method. According to priori knowledge of human face, the two-dimensional key points can be transformed into three-dimensional key points, denoted as $X_i = (x_i, y_i, z_i), i = 1,2,3......n$.

As another example, the marker can be a general marker. The rear-facing camera of the terminal device 20 can capture the images including the general marker in real time. The terminal device 20 can use a preset initialization method to obtain a series of two-dimensional key points of the general marker in the image. Specifically, the two-dimensional key points can be expressive feature points, such as Harris corner points or FAST corner points. The terminal device 20 can further track the two-dimensional key points between two image frames captured by the rear-facing camera, for example, the two-dimensional key points can be tracked between two adjacent image frames. Assume that the two-dimensional key points $(u_i, v_i)$ of a previous frame correspond to the two-dimensional key points $\left( u_i^{'}, v_i^{'} \right)$ of a succeeding frame, and an internal reference matrix of the rear-facing camera of the terminal device 20 is K. The terminal device 20 can employ a triangulation method to convert the series of two-dimensional key points of the general mark in the image into three-dimensional key points $X_i$. Herein, the triangulation method can specifically be a Direct Linear Transform (DLT in short). Assume that a projection matrix of the previous frame is

$$P = \begin{bmatrix} p^{1T} \\ p^{2T} \\ p^{3T} \end{bmatrix},$$

and a projection matrix of the succeeding frame is

$$P' = \begin{bmatrix} p'^{1T} \\ p'^{2T} \\ p'^{3T} \end{bmatrix},$$

where $p^{1T}$ represents the first row of P, $p^{2T}$ represents the second row of P, $p^{3T}$ represents the third row of P, $p'^{1T}$ represents the first row of P', $p'^{2T}$ represents the second row of P', $p'^{3T}$ represents the third row of P . The relationship between the projection matrix P of the previous frame, the three-dimensional points $X_i$, and the two-dimensional key points $(u_i, v_i)$ of the previous frame can be determined by the following formula (1).

$$\begin{bmatrix} u_i \\ v_i \\ 1 \end{bmatrix} = PX_i \qquad (1)$$

The relationship between the projection matrix P' of the succeeding frame, the three-dimensional key points $X_i$, and the two-dimensional key points $(u'_i, v'_i)$ of the succeeding frame can be determined by the following formula (2).

$$\begin{bmatrix} u'_i \\ v'_i \\ 1 \end{bmatrix} = P'X_i \qquad (2)$$

The relationship between the projection matrix P of the previous frame, the projection matrix P' of the succeeding frame, the three-dimensional points $X_i$, the two-dimensional key points $(u_i, v_i)$ of the previous frame, and the two-dimensional key points $(u'_i, v'_i)$ of the succeeding frame can be determined by the following formula (3).

$$\begin{bmatrix} u_i p^{3T} - p^{1T} \\ v_i p^{3T} - p^{2T} \\ u'_i p'^{3T} - p'^{1T} \\ v'_i p'^{3T} - p'^{2T} \end{bmatrix} X_i \overset{\Delta}{=} AX_i = 0 \qquad (3)$$

where A denotes a matrix. A right eigenvector corresponding to a minimum eigenvalue of the matrix A is a solution of the three-dimensional points $X_i$. The projection matrix P of the previous frame and the projection matrix P' of the succeeding frame can be obtained from the fundamental matrix F.

When three-dimensional points of the marker can be detected in each image frame, the correlation matrix between two adjacent frames can be determined. The specific processes are as follows.

The three-dimensional points corresponding to two adjacent frames can be represented as the homogeneous coordinate form. For example, $X_i = (x_i, y_i, z_i)$ represents the three-dimensional points of the previous frame, a homogeneous coordinate form of $X_i = (x_i, y_i, z_i)$

$$P_i = \begin{pmatrix} x_i \\ y_i \\ z_i \\ 1 \end{pmatrix}.$$

can be $X'_i = (x'_i, y'_i, z'_i)$ = represents the three-dimensional points of the succeeding frame, a homogeneous coordinate form of $X'_i = (x'_i, y'_i, z'_i)$ can

$$P'_i = \begin{pmatrix} x'_i \\ y'_i \\ z'_i \\ 1 \end{pmatrix}.$$

be

The relationship between the homogeneous coordinate form $P_i$ of $X_i = (x_i, y_i, z_i)$, the homogeneous coordinate form $P'_i$ of $X'_i = (x'_i, y'_i, z'_i)$, and the correlation matrix M between two adjacent frames can be determined by the following formula (4).

$$P'_i = MP_i \qquad (4)$$

where M can be expresses as the form of formula (5).

$$M = \begin{bmatrix} R_{3\times 3} & T_{3\times 1} \\ 0 & 1 \end{bmatrix} \quad (5)$$

The correlation matrix includes a rotation matrix and a translation vector. The rotation matrix represents the attitude-change information of the one or more key points in the first image and the second image. The translation vector represents the position-change information of the one or more key points in the first image and the second image. Specifically, $R_{3\times 3}$ denotes the rotation matrix representing the attitude-change information of key points of the marker in the previous and succeeding frames. $T_{3\times 1}$ denotes the translation vector representing the position-change information of key points of the marker in the previous and succeeding frames.

Optionally, M can be calculated by optimizing a cost function shown in formula (6).

$$M^* = \arg\min \left| (MP - P') \; \overrightarrow{V} \right|^2 \quad (6)$$

where V represents a visual matrix, and when a feature point i can be observed in both two frames, for example, two adjacent frames, $V(i, :)=1$; otherwise, $V(i, :)=0$.

In addition, in order to improve the calculation accuracy of $M$, the above formula (6) can also be optimized. The optimization methods can include the followings.

Random sample consensus (RANSAC) method can be used to select some feature points to reduce the influence of outliers, and a nonlinear optimization method, such as Levenberg-Marquardt (LM), can be used to further optimize the formula (6).

Alternatively, when there are only two-dimensional points in a current frame of the marker, for example, the marker is a general marker, R and T can be calculated using the perspective-n-point (PnP) method, and the nonlinear optimization method, such as LM, can be further used to minimize a target function as shown in the following formula (7).

$$\min \sum_i \left| \overrightarrow{u_i} - K(RX_i + T) \right|^2 \quad (7)$$

where R is specifically $R_{3\times 3}$ in formula (5), and T is specifically $T_{3\times 1}$ in formula (5). Optionally, the RANSAC method can be used to select some feature points to reduce the influence of outliers.

After calculating the correlation matrix $M$ between the previous frame and the succeeding frame, the terminal device 20 can determine the position-attitude-motion information of the marker in the previous frame and the succeeding frame according to the correlation matrix. Specifically, the position-attitude-motion information includes position-change information and attitude-change information. According to formula (5), $R_{3\times 3}$ denotes the rotation matrix representing the attitude-change information of key points of the marker in the previous and succeeding frames. Therefore, the terminal device 20 can determine the attitude-change information of the marker in the previous and succeeding frames, according to the attitude-change information of key points of the marker in the previous and succeeding frames. In addition, according to formula (5), $T_{3\times 1}$ denotes the translation vector representing the position-change information of key points of the marker in the previous and succeeding frames. Therefore, the terminal device 20 can determine the position-change information of the marker in the previous and succeeding frames, according to the position-change information of key points of the marker in the previous and succeeding frames.

Step S602, the position-attitude-motion information of the photographing device relative to the marker is determined, according to the position-attitude-motion information of the marker in the at least two image frames captured by the photographing device.

Specifically, the terminal device 20 can determine the attitude-change information of the terminal device 20 relative to the marker, according to the attitude-change information of the marker in the previous and succeeding frames captured by the terminal device 20, or can determine the position-change information of the terminal device 20 relative to the marker, according to the position-change information of the marker in the previous and succeeding frames captured by the terminal device 20.

In other embodiments, the terminal device 20 can also use $R_{3\times 3}$ and $T_{3\times 1}$ as input signals of a proportional integral derivative (PID) controller, such that the controller can output the control command for controlling the UAV 21. $R_{3\times 3}$ can be configured to control the attitude of the UAV 21. For example, the terminal device 20 can convert $R_{3\times 3}$ into Euler angles, and generate a control command for controlling the UAV 21 to rotate based on the Euler angles. $T_{3\times 1}$ can be configured to control the translation of the UAV 21. Optionally, $R_{3\times 3}$ and $T_{3\times 1}$ can use a common controller or $R_{3\times 3}$ and $T_{3\times 1}$ can use two different controllers.

The second feasible implementation manner for determining the position-attitude-motion information of the photographing device relative to the marker is to determine the position-attitude-motion information of the photographing device relative to the marker according to the position-attitude-motion information of the photographing device detected by the IMU

Specifically, the terminal device 20 can be provided with an IMU. The IMU generally includes one or more gyroscopes and one or more accelerometers. The IMU can be configured to detect the pitch angle, the roll angle, the yaw angle, an acceleration, and the like, of the terminal device 20. Assuming that the markers are different, the terminal device 20 can determine the attitude-change information of the terminal device 20 relative to the marker, according to the attitude-change information of the terminal device 20 detected by the IMU, or can further determine the position-change information of the terminal device 20 relative to the marker, according to the position-change information of the terminal device 20 calculated from the acceleration of the terminal device 20 detected by the IMU

The third feasible implementation manner for determining the position-attitude-motion information of the photographing device relative to the marker is to determine the position-attitude-motion information of the photographing device relative to the marker, according to the position-attitude-motion information of the marker in at least two image frames captured by the photographing device and the position-attitude-motion information of the photographing device detected by the IMU

Specifically, the attitude-change information or the position-change information of the terminal device 20 relative to the marker can be determined by combining the above two implementation manners for determining the position-attitude-motion information of the photographing device relative to the marker. That is, when the terminal device 20 determines the position-attitude-motion information of the terminal device 20 relative to the marker, according to the position-attitude-motion information of the marker in at least two image frames captured by the photographing device, the position-attitude-motion information of the terminal device 20 detected by the IMU of the terminal device 20 can be referenced to.

Optionally, if an absolute value of a difference between the position-attitude-motion information of the photographing device determined according to the position-attitude-motion information of the marker in the at least two image frames captured by the photographing device and the position-attitude-motion information of the photographing device detected by the IMU is greater than a threshold, determined position-attitude-motion information of the photographing device relative to the marker can be deleted.

For example, if the position-attitude-motion information of the terminal device 20 determined by the terminal device 20 according to the position-attitude-motion information of the marker in the at least two image frames captured by the terminal device 20 and the position-attitude-motion information of the terminal device 20 detected by the IMU are inconsistent and the difference is large, it indicates that the position-attitude-motion information of the terminal device 20 relative to the marker determined by the terminal device 20 is inaccurate. Furthermore, the position-attitude-motion information of the terminal device 20 relative to the marker determined before a current moment can be initialized, for example, can be deleted.

In the embodiment, the correlation matrix between two image frames can be determined based on the coordinates of one or more key points of the marker in at least two image frames captured by the terminal device, and the position-attitude-motion information of the marker in the two image frames can be determined according to the correlation matrix. The position-attitude-motion information of the terminal device relative to the marker can be further determined, according to the position-attitude-motion information of the marker in the two image frames. As such, the calculation accuracy of the position-attitude-motion information of the terminal device relative to the marker can be improved.

A method for controlling a mobile object is provided according to an embodiment of the present disclosure. On the basis of the above embodiments, before controlling the mobile object, the method also includes obtaining a trigger command for triggering a movement of the mobile device. The trigger command is generated by operating on a first activation button.

According to the above embodiments, the user can control the UAV 21 through the terminal device 20. For example, when the front-facing camera of the terminal device 20 captures the user's face, the terminal device 20 can move toward the left relative to the user's face, and further map the movement direction of the terminal device 20 relative to the user's face to a control command for controlling the UAV 21. The situation that the terminal device 20 moves toward the left relative to the user's face can include the several following possible situations.

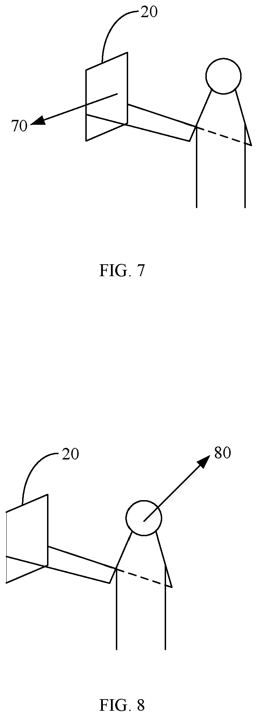

One possible situation is that, as shown in FIG. 7, the user's face does not move and the user moves the terminal device 20 toward the left as in a direction denoted by an arrow 70.

Another possible situation is that, as shown in FIG. 8, the terminal device 20 does not move and the user's face moves toward the right as in a direction denoted by an arrow 80.

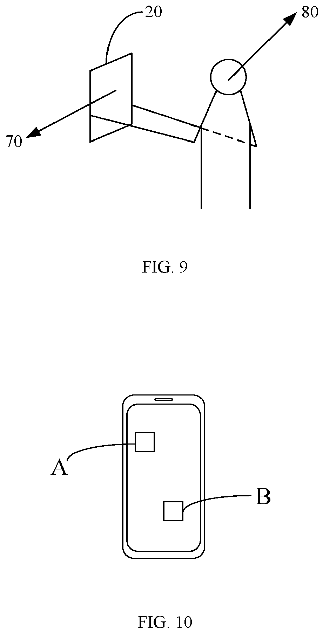

Another possible situation is that, as shown in FIG. 9, the user's face and the terminal device 20 are moving simultaneously. The user moves the terminal device 20 toward the left as in a direction denoted by the arrow 70, and the user's face moves toward the right as in a direction denoted by the arrow 80.

It can be seen that the change of position and attitude of the user's face or the change of position and attitude of the terminal device 20 itself can both cause the change of position and attitude of the terminal device 20 relative to the user's face. The terminal device 20 can control the UAV 21 according to the change of position and attitude of the terminal device 20 relative to the user's face.

Sometimes the user may inadvertently turn the head or inadvertently move the terminal device 20, which may also cause the change of position and attitude of the UAV 21. In this situation, the user may not want the change of position and attitude of the UAV 21. In order to avoid the change of position and attitude of the UAV 21 caused by the accidental operation of the user, an activation button, such as the activation button A shown in FIG. 10, can be provided on the terminal device 20.

When the user clicks the activation button A, the terminal device 20 can generate the trigger command according to the click operation on the activation button A performed by the user. The trigger command can trigger the terminal device 20 to send the control command to the UAV 21. If the user does not click the activation button A, the terminal device 20 cannot send the control command to the UAV 21 even if the control device 20 generates the control command, such that it can be ensured that the UAV 21 does not move. Alternatively, the trigger command can also trigger the UAV 21 to move. For example, when the UAV 21 receives both the control command and the trigger command sent by the terminal device 20, the UAV 21 executes the control command. If the UAV 21 only receives the control command sent by the terminal device 20 and does not receive the trigger command sent by terminal device 20, the control command will not be executed.

In some embodiments, before determining the position-attitude information of the photographing device relative to the marker, the method further includes obtaining an initialization command. The initialization command is configured to initialize the determined position-attitude information of the photographing device relative to the marker. The initialization command is generated by operating on a second activation button.

As shown in FIG. 10, the terminal device 20 can also be provided with an activation button B. When the user clicks the activation button B, the terminal device 20 can generate the initialization command according to the click operation on the activation button B performed by the user. The initialization command can be configured to initialize, such as delete, the position-attitude-motion information of the terminal device 20 relative to the marker determined before a current moment. That is, before the user controls the UAV 21 through the terminal device 20, the terminal device 20 may store the position-attitude-motion information of the terminal device 20 relative to the marker, such as the user's face, determined at a historical moment. In order to avoid the influence of the position-attitude-motion information determined at the historical moment on the position-attitude-motion information determined at the current moment, the user can initialize the position-attitude-motion information of the terminal device 20 relative to the marker, such as the user's face, determined by the terminal device 20 at the historical moment by clicking the activation button B.

In the embodiment, the operation on the first activation button of the terminal device performed by the user can cause the terminal device to generate the trigger command for triggering the UAV to move. The change of position and attitude of the UAV due to the user's misoperation can be avoid and the accurate control of the UAV can be realized. In addition, the operation on the second activation button of the terminal device performed by the user can cause the terminal device to generate the initialization command for initializing the determined position and attitude information of the terminal device relative to the marker. The influence of the position-attitude-motion information determined at the historical moment on the position-attitude-motion information determined at the current moment can be avoid. The accurate control of the UAV can be further realized.

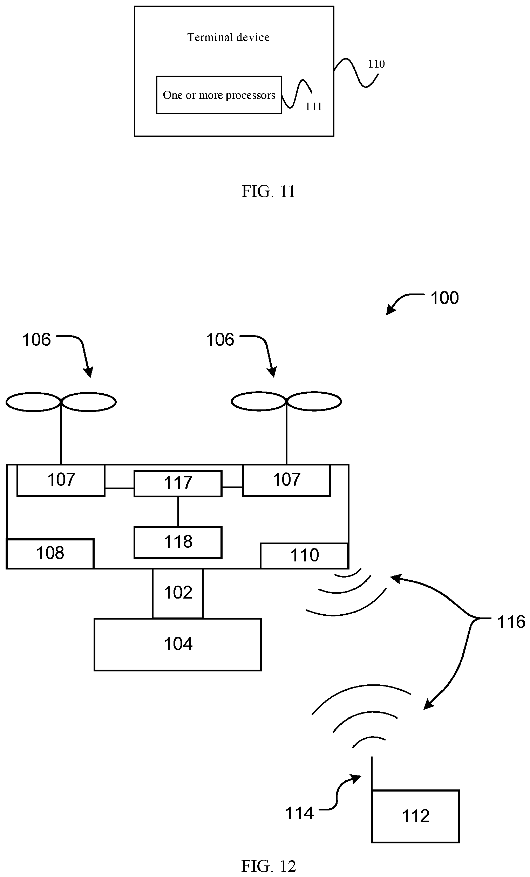

A terminal device is provided according to an embodiment of the present disclosure. FIG. 11 is a structural diagram of the terminal device according to the embodiment of the present disclosure. As shown in FIG. 11, the terminal device 110 includes one or more processors 111. The one or more processors 111 are configured to obtain the marker in the image captured by the photographing device, determine the position-attitude information of the photographing device relative to the marker, and control the mobile object according to the position-attitude information of the photographing device relative to the marker.

Specifically, the position-attitude information can include at least one of the followings: the position information and the attitude information. The attitude information can include at least one of the followings: the pitch angle, the roll angle, or the yaw angle.

Optionally, when obtaining the marker in the image captured by the photographing device, the one or more processors 111 can be specifically configured to perform at least one of the followings: obtaining the marker selected by the user in the image captured by the photographing device, obtaining the marker in the image captured by the photographing device that matches the preset reference image, or obtaining the marker in the image captured by the photographing device that is formed by the preset number of feature points.

Furthermore, when obtaining the marker selected by the user in the image captured by the photographing device, the one or more processors 111 can be specifically configured to perform at least one of the followings: obtaining the marker selected by the user through drawing a box in the image captured by the photographing device, or obtaining the marker selected by the user through clicking the image captured by the photographing device.

Specifically, when determining the position-attitude information of the photographing device relative to the marker, the one or more processors 111 can be specifically configured to determine the position-attitude information of the marker in the image captured by the photographing device, and determine the position-attitude information of the photographing device relative to the marker, according to the position-attitude information of the marker in the image captured by the photographing device. When determining the position-attitude information of the marker in the image captured by the photographing device, the one or more processors 111 can be specifically configured to determine the position-attitude information of the marker in the image captured by the photographing device, according to the coordinates of one or more key points of the marker in the image captured by the photographing device.

Optionally, when controlling the mobile object according to the position-attitude information of the photographing device relative to the marker, the one or more processors 111 can be specifically configured to perform at least one of the followings: controlling the position information of the mobile object relative to the preset origin, according to the position information of the photographing device relative to the marker, controlling the attitude information of the mobile object, according to the attitude information of the photographing device relative to the marker, or controlling the moving speed of the mobile object, according to the attitude information of the photographing device relative to the marker. When controlling the moving speed of the mobile object, according to the attitude information of the photographing device relative to the marker, the one or more processors 111 can be specifically configured to control the speed at which the mobile object moves along the Y-axis in the ground coordinate system, according to the pitch angle of the photographing device relative to the marker, control the speed at which the mobile object moves along the X-axis in the ground coordinate system, according to the roll angle of the photographing device relative to the marker, and control the speed at which the mobile object moves along the Z-axis in the ground coordinate system, according to the yaw angle of the photographing device relative to the marker. When controlling the attitude information of the mobile object, according to the attitude information of the photographing device relative to the marker, the one or more processors 111 can be specifically configured to control the pitch angle of the mobile object according to the pitch angle of the photographing device relative to the marker, control the roll angle of the mobile object according to the roll angle of the photographing device relative to the marker, and control the yaw angle of the mobile object according to the yaw angle of the photographing device relative to the marker. When controlling the position information of the mobile object relative to the preset origin, according to the position information of the photographing device relative to the marker, the one or more processors 111 can be specifically configured to control the distance of the mobile object relative to the preset origin according to the distance of the photographing device relative to the marker.

The specific principle and implementation of the terminal device according to the embodiment of the present disclosure are similar to those of the embodiment shown in FIG. 1, description of which is omitted here.

In the embodiment, the position-attitude information of the photographing device relative to the marker can be determined by obtaining the marker in the image captured by the photographing device, and the mobile object can be controlled according to the position-attitude information of the photographing device relative to the marker. Since the position-attitude information of the photographing device relative to the marker can be precisely determined, the precise control of the mobile object can be realized when the mobile object is controlled according to the position-attitude information of the photographing device relative to the marker.

A terminal device is provided according to an embodiment of the present disclosure. On the basis of the technical solution provided by the embodiment of the present disclosure shown in FIG. 11, the one or more processors 111 are further configured to determine the position-attitude-motion information of the photographing device relative to the marker, and control the mobile object according to the position-attitude-motion information of the photographing device relative to the marker. The position-attitude-motion information can include at least one of the followings: the position-change information or the attitude-change information.

Optionally, when controlling the mobile object according to the position-attitude-motion information of the photographing device relative to the marker, the one or more processors 111 can be specifically configured to perform at least one of the followings: controlling the position-change information of the mobile object relative to the preset origin, according to the position-change information of the photographing device relative to the marker, or controlling the attitude-change information of the mobile object relative to the preset origin, according to the attitude-change information of the photographing device relative to the marker.

The specific principle and implementation of the terminal device according to the embodiment of the present disclosure are similar to those of the embodiment shown in FIG. 5, description of which is omitted here.

In the embodiment, the position-change information or the attitude-change information of the photographing device relative to the marker can be determined by obtaining the marker in the images captured by the photographing device, and the change of position of the mobile object can be controlled according to the position-change information of the photographing device relative to the marker, or the change of attitude of the mobile object can be controlled according to the attitude-change information of the photographing device relative to the marker. Since the position-change information or the attitude-change information of the photographing device relative to the marker can be precisely determined, the mobile object can be precisely controlled according to the position-change information or the attitude-change information of the photographing device relative to the marker.

A terminal device is provided according to an embodiment of the present disclosure. On the basis of the technical solution provided by the above embodiment of the present disclosure, the one or more processors 111 determining the position-attitude-motion information of the photographing device relative to the marker includes the following several feasible implementation manners.

One feasible implementation manner is that when determining the position-attitude-motion information of the photographing device relative to the marker, the one or more processors 111 are specifically configured to determine the position-attitude-motion information of the marker in the at least two image frames captured by the photographing device, and determine the position-attitude-motion information of the photographing device relative to the marker, according to the position-attitude-motion information of the marker in the at least two image frames captured by the photographing device. When determining the position-attitude-motion information of the marker in the at least two image frames captured by the photographing device, the one or more processors 111 are specifically configured to, according to the first coordinates of the one or more key points of the marker in the first image captured by the photographing device and the second coordinates of the one or more key points of the marker in the second image captured by the photographing device, determine the correlation matrix between the first image and the second image, and determine the position-attitude-motion information of the marker in the first image and the second image, according to the correlation matrix between the first image and the second image. The correlation matrix includes the rotation matrix and the translation vector. The rotation matrix represents the attitude-change information of the one or more key points in the first image and the second image. The translation vector represents the position-change information of the one or more key points in the first image and the second image.

Another feasible implementation manner is that when determining the position-attitude-motion information of the photographing device relative to the marker, the one or more processors 111 are specifically configured to determine the position-attitude-motion information of the photographing device relative to the marker according to the position-attitude-motion information of the photographing device detected by the IMU

A further feasible implementation manner is that when determining the position-attitude-motion information of the photographing device relative to the marker, the one or more processors 111 are specifically configured to determine the position-attitude-motion information of the photographing device relative to the marker, according to the position-attitude-motion information of the marker in the at least two image frames captured by the photographing device and the position-attitude-motion information of the photographing device detected by the IMU If the absolute value of the difference between the position-attitude-motion information of the photographing device determined according to the position-attitude-motion information of the marker in the at least two image frames captured by the photographing device and the position-attitude-motion information of the photographing device detected by the IMU is greater than the threshold, the one or more processors 111 are further configured to delete determined position-attitude-motion information of the photographing device relative to the marker.

The specific principle and implementation of the terminal device according to the embodiment of the present disclosure are similar to those of the embodiment shown in FIG. 6, description of which is omitted here.

In the embodiment, the correlation matrix between two image frames can be determined by the coordinates of one or more key points of the marker in at least two image frames captured by the terminal device, and the position-attitude-motion information of the marker in the two image frames can be determined according to the correlation matrix. The position-attitude-motion information of the terminal device relative to the marker can be further determined, according to the position-attitude-motion information of the marker in the two image frames. As such, the calculation accuracy of the position-attitude-motion information of the terminal device relative to the marker can be improved.

A terminal device is provided according to an embodiment of the present disclosure. On the basis of the technical solution provided by the above embodiments of the present disclosure, before controlling the mobile object, the one or more processors 111 are also configured to obtain the trigger command for triggering a movement of the mobile device. The trigger command is generated by operating on a first activation button.

Furthermore, before determining the position-attitude information of the photographing device relative to the marker, the one or more processors 111 are also configured to obtain the initialization command. The initialization command is configured to initialize the determined position-attitude information of the photographing device relative to the marker. The initialization command is generated by operating on the second activation button.

The specific principle and implementation of the terminal device according to the embodiment of the present disclosure are similar to those of the embodiment shown in FIG. 10, description of which is omitted here.

In the embodiment, the operation on the first activation button of the terminal device performed by the user can cause the terminal device to generate the trigger command for triggering the UAV to move. The change of position and attitude of the UAV due to the user's misoperation can be avoid and the accurate control of the UAV can be realized. In addition, the operation on the second activation button of the terminal device performed by the user can cause the terminal device to generate the initialization command for initializing the determined position and attitude information of the terminal device relative to the marker. The influence of the position-attitude-motion information determined at the historical moment on the position-attitude-motion information determined at a current moment can be avoided. The accurate control of the UAV can be further realized.

A UAV 100 is provided according to an embodiment of the present disclosure. FIG. 12 is a structural diagram of the UAV 100 according to the embodiment of the present disclosure. As shown in FIG. 12, the UAV 100 includes a fuselage, a power system, and a flight controller 118. The power system includes at least one of the followings: motors 107, propellers 106, or an electronic governor 117. The power system is provided on the fuselage and configured to provide power for flight. The flight controller 118 is communicatively connected to the power system and configured to control the flight of the UAV.

In addition, as shown in FIG. 12, the UAV 100 also includes a sensing system 108, a communication system 110, a support device 102, and a photographing device 104. The support device 102 can specifically be a gimbal. The communication system 110 can specifically include a receiver. The receiver is configured to receive a wireless signal transmitted by an antenna 114 of a ground station 112. Reference numeral 116 denotes electromagnetic waves generated during the communication between the receiver and the antenna 114.

The ground station 112 can specifically be the terminal device of the above embodiments. The terminal device can generate control commands and send the control commands to the flight controller 118 through the communication system 110 of the UAV 100. The flight controller 118 can further control the UAV 100 according to the control commands sent by the terminal device. The specific principle and implementation of the terminal device controlling the UAV 100 are similar to those of the above embodiments, description of which is omitted here.

A control system of a mobile object is provided according to an embodiment of the present disclosure. The mobile object can specifically be a UAV. As shown in FIG. 2, the control system of the mobile object includes the terminal device 20 and the UAV 21. The specific principle and implementation of the terminal device 20 controlling the UAV 21 are similar to those of the above embodiments, description of which is omitted here.

In several embodiments provided in the present disclosure, it should be appreciated that the disclosed apparatus and methods can be implemented in other manners. For example, the embodiments of the apparatus described above are merely illustrative. For example, the division of units may only be a logical function division, and there may be other ways of dividing the units. For example, multiple units or components may be combined or may be integrated into another system, or some features may be ignored, or not executed. Further, the coupling or direct coupling or communication connection shown or discussed may include a direct connection or an indirect connection or communication connection through one or more interfaces, devices, or units, which may be electrical, mechanical, or in other form.

The units described as separate components may or may not be physically separate, and a component shown as a unit may or may not be a physical unit. That is, the units may be located in one place or may be distributed over a plurality of network elements. Some or all of the components may be selected according to the actual needs to achieve the object of the present disclosure.

In addition, the functional units in the various embodiments of the present disclosure may be integrated in one processing unit, or each unit may be an individual physical unit, or two or more units may be integrated in one unit. The above-described integrated units can be implemented in the form of hardware or in the form of hardware plus software functional units.

The above-described integrated unit implemented in the form of software functional units can be stored in a computer-readable storage medium. The above-described software functional units can include instructions that enable a computer device, such as a personal computer, a server, or a network device, or a processor to perform part of the methods according to various embodiments of the present disclosure. The above-described storage medium can be any medium that can store program codes, for example, a USB disk, a mobile hard disk, a read-only memory (ROM), a random access memory (RAM), a magnetic disk, or an optical disk.

Those skilled in the art may clearly understand that, for the convenience and simplicity of the description, the divisions of the above-described functional modules are merely used as examples. In practice, the above functions may be assigned to different functional modules for completion, according to the needs. That is, the internal structure of the device can be divided into different functional modules to complete all or part of the functions described above. For specific working processes of the above-described apparatus, reference may be made to the corresponding processes in the above-described embodiments of method, description of which is omitted here.

It should be noted that the above-described embodiments are merely for describing the technical solutions of the present disclosure, but are not intend to limit the present disclosure. Although the present disclosure has been described in detail with reference to the various embodiments described above, it will be apparent to those skilled in the art that the technical solutions described in the various embodiments described above can be modified or some or all of the technical features can be equivalently replaced. Any modifications or replacements do not make the essence of the corresponding technical solutions depart from the scope of the technical solutions of the embodiments of the present disclosure.

## Claims

1. A method for controlling a mobile object, comprising:

   obtaining a marker in an image captured by a photographing device;
   determining position-attitude information of the photographing device relative to the marker; and
   controlling the mobile object according to the position-attitude information of the photographing device relative to the marker.

2.  The method according to claim 1, wherein the position-attitude information comprises at least one of: position information or attitude information.

3.  The method according to claim 1 or 2, wherein determining the position-attitude information of the photographing device relative to the marker comprises:

    determining position-attitude information of the marker in the image captured by the photographing device; and
    determining the position-attitude information of the photographing device relative to the marker, according to the position-attitude information of the marker in the image captured by the photographing device.

4.  The method according to claim 3, wherein determining the position-attitude information of the marker in the image captured by the photographing device comprises:
    determining the position-attitude information of the marker in the image captured by the photographing device, according to coordinates of one or more key points of the marker in the image captured by the photographing device.

5.  The method according to any of claims 1-4, wherein controlling the mobile object according to the position-attitude information of the photographing device relative to the marker comprises at least one of:

    controlling position information of the mobile object relative to a preset origin, according to the position information of the photographing device relative to the marker;
    controlling attitude information of the mobile object, according to the attitude information of the photographing device relative to the marker; or
    controlling a moving speed of the mobile object, according to the attitude information of the photographing device relative to the marker.

6.  The method according to claim 5, wherein the attitude information comprises at least one of:
    a pitch angle, a roll angle, or a yaw angle.

7.  The method according to claim 6, wherein controlling the moving speed of the mobile object, according to the attitude information of the photographing device relative to the marker comprises:

    controlling a speed at which the mobile object moves along a Y-axis of a ground coordinate system, according to the pitch angle of the photographing device relative to the marker;
controlling a speed at which the mobile object moves along an X-axis of the ground coordinate system, according to the roll angle of the photographing device relative to the marker; and
controlling a speed at which the mobile object moves along a Z-axis of the ground coordinate system, according to the yaw angle of the photographing device relative to the marker.

8.  The method according to claim 6, wherein controlling the attitude information of the mobile object, according to the attitude information of the photographing device relative to the marker comprises:

    controlling a pitch angle of the mobile object according to the pitch angle of the photographing device relative to the marker;
    controlling a roll angle of the mobile object according to a roll angle of the photographing device relative to the marker; and
    controlling a yaw angle of the mobile object according to a yaw angle of the photographing device relative to the marker.

9.  The method according to claim 5 or 6, wherein controlling the position information of the mobile object relative to the preset origin, according to the position information of the photographing device relative to the marker comprises:
    controlling a distance of the mobile object relative to the preset origin according to a distance of the photographing device relative to the marker.

10. The method according to claim 1, further comprising:

    determining position-attitude-motion information of the photographing device relative to the marker; and
    controlling the mobile object according to the position-attitude-motion information of the photographing device relative to the marker.

11. The method according to claim 10, wherein the position-attitude-motion information comprises at least one of:
    position-change information or attitude-change information.

12. The method according to claim 10 or 11, wherein determining the position-attitude-motion information of the photographing device relative to the marker comprises:

    determining position-attitude-motion information of the marker in at least two image frames captured by the photographing device; and
    determining the position-attitude-motion information of the photographing device relative to the marker, according to the position-attitude-motion information of the marker in the at least two image frames captured by the photographing device.

13. The method according to claim 12, wherein determining the position-attitude-motion information of the marker in the at least two image frames captured by the photographing device comprises:

determining a correlation matrix between a first image and a second image, according to first coordinates of one or more key points of the marker in the first image captured by the photographing device and second coordinates of the one or more key points of the marker in the second image captured by the photographing device; and
determining the position-attitude-motion information of the marker in the first image and the second image, according to the correlation matrix between the first image and the second image.

14. The method according to claim 13, wherein the correlation matrix includes a rotation matrix and a translation vector, the rotation matrix represents the attitude-change information of the one or more key points in the first image and the second image, and the translation vector represents the position-change information of the one or more key points in the first image and the second image.

15. The method according to claim 10 or 11, wherein determining the position-attitude-motion information of the photographing device relative to the marker comprises:
determining the position-attitude-motion information of the photographing device relative to the marker according to position-attitude-motion information of the photographing device detected by an Inertial Measurement Unit (IMU).

16. The method according to claim 10 or 11, wherein determining the position-attitude-motion information of the photographing device relative to the marker comprises:
determining the position-attitude-motion information of the photographing device relative to the marker, according to position-attitude-motion information of the marker in at least two image frames captured by the photographing device and position-attitude-motion information of the photographing device detected by the IMU

17. The method according to claim 16, further comprising:

in response to an absolute value of a difference between the position-attitude-motion information of the photographing device determined according to the position-attitude-motion information of the marker in the at least two image frames captured by the photographing device and the position-attitude-motion information of the photographing device detected by the IMU is greater than a threshold, deleting determined position-attitude-motion information of the photographing device relative to the marker.

18. The method according to any one of claims 10-17, wherein controlling the mobile object according to the position-attitude-motion information of the photographing device relative to the marker comprises at least one of:

controlling position-change information of the mobile object relative to a preset origin, according to the position-change information of the photographing device relative to the marker; or controlling attitude-change information of the mobile object relative to the preset origin, according to the attitude-change information of the photographing device relative to the marker.

19. The method according to any of claims 1-18, wherein obtaining the marker in the image captured by the photographing device comprises at least one of:

obtaining the marker in the image captured by the photographing device that is selected by a user;
obtaining the marker in the image captured by the photographing device that matches a preset reference image; or
obtaining the marker in the image captured by the photographing device that is formed by a preset number of feature points.

20. The method according to claim 19, wherein obtaining the marker in the image captured by the photographing device that is selected by the user comprises at least one of:

obtaining the marker selected by the user through drawing a box in the image captured by the photographing device; or
obtaining the marker selected by the user through clicking the image captured by the photographing device.

21. The method according to any of claims 1-20, further comprising, before controlling the mobile object:
obtaining a trigger command for triggering a movement of the mobile device.

22. The method according to claim 21, wherein the trigger command is generated by operating on a first activation button.

23. The method according to any of claims 1-20, further comprising, before determining the position-attitude information of the photographing device relative to the marker:
obtaining an initialization command, the initialization command being configured to initialize the determined position-attitude information of the photographing device relative to the marker.

24. The method according to claim 23, wherein the initialization command is generated by operating on a second activation button.

25. A terminal device, comprising:
one or more processors being configured to:

obtain a marker in an image captured by a photographing device;
determine position-attitude information of the photographing device relative to the marker; and
control the mobile object according to the position-attitude information of the photographing device relative to the marker.

26. The terminal device according to claim 25, wherein the position-attitude information comprises at least one of:
position information or attitude information.

27. The terminal device according to claim 25 or 26, wherein when determining the position-attitude information of the photographing device relative to the marker, the one or more processors are configured to:

determine position-attitude information of the marker in the image captured by the photographing device; and
determine the position-attitude information of the photographing device relative to the marker, according to the position-attitude information of the marker in the image captured by the photographing device.

28. The terminal device according to claim 27, wherein when determining the position-attitude information of the marker in the image captured by the photographing device, the one or more processors are configured to:
determine the position-attitude information of the marker in the image captured by the photographing device, according to coordinates of one or more key points of the marker in the image captured by the photographing device.

29. The terminal device according to any of claims 25-28, wherein when controlling the mobile object according to the position-attitude information of the photographing device relative to the marker, the one or more processors are configured to at least one of:

control position information of the mobile object relative to a preset origin, according to the position information of the photographing device relative to the marker;
control attitude information of the mobile object, according to the attitude information of the photographing device relative to the marker; or
control a moving speed of the mobile object, according to the attitude information of the photographing device relative to the marker.

30. The terminal device according to claim 29, wherein the attitude information comprises at least one of:
a pitch angle, a roll angle, or a yaw angle.

31. The terminal device according to claim 30, wherein when controlling the moving speed of the mobile object, according to the attitude information of the photographing device relative to the marker, the one or more processors are configured to:

control a speed at which the mobile object moves along a Y-axis of a ground coordinate system, according to the pitch angle of the photographing device relative to the marker;
control a speed at which the mobile object moves along an X-axis of a ground coordinate system, according to the roll angle of the photographing device relative to the marker; and
control a speed at which the mobile object moves along a Z-axis of a ground coordinate system, according to the yaw angle of the photographing device relative to the marker.

32. The terminal device according to claim 30, wherein when controlling the attitude information of the mobile object, according to the attitude information of the photographing device relative to the marker, the one or more processors are configured to:

control a pitch angle of the mobile object according to the pitch angle of the photographing device relative to the marker;
control a roll angle of the mobile object according to a roll angle of the photographing device relative to the marker; and
control a yaw angle of the mobile object according to a yaw angle of the photographing device relative to the marker.

33. The terminal device according to claim 29 or 30, wherein when controlling the position information of the mobile object relative to the preset origin, according to the position information of the photographing device relative to the marker, the one or more processors are configured to:

control a distance of the mobile object relative to the preset origin according to a distance of the photographing device relative to the marker.

34. The terminal device according to claim 25, wherein the one or more processors are further configured to:

determine position-attitude-motion information of the photographing device relative to the marker; and

control the mobile object according to the position-attitude-motion information of the photographing device relative to the marker.

35. The terminal device according to claim 34, wherein the position-attitude-motion information comprises at least one of:

position-change information or attitude-change information.

36. The terminal device according to claim 34 or 35, wherein when determining the position-attitude-motion information of the photographing device relative to the marker, the one or more processors are configured to:

determine the position-attitude-motion information of the marker in at least two image frames captured by the photographing device; and determine the position-attitude-motion information of the photographing device relative to the marker, according to the position-attitude-motion information of the marker in the at least two image frames captured by the photographing device.

37. The terminal device according to claim 36, wherein when determining the position-attitude-motion information of the marker in the at least two image frames captured by the photographing device, the one or more processors are configured to:

determine a correlation matrix between a first image and a second image, according to first coordinates of one or more key points of the marker in the first image captured by the photographing device and second coordinates of the one or more key points of the marker in the second image captured by the photographing device; and determine the position-attitude-motion information of the marker in the first image and the second image, according to the correlation matrix between the first image and the second image.

38. The terminal device according to claim 37, wherein the correlation matrix includes a rotation matrix and a translation vector, the rotation matrix represents the attitude-change information of the one or more key points in the first image and the second image, and the translation vector represents the position-change information of the one or more key points in the first image and the second image.

39. The terminal device according to claim 34 or 35, wherein when determining the position-attitude-motion information of the photographing device relative to the marker, the one or more processors are configured to:
determine the position-attitude-motion information of the photographing device relative to the marker according to the position-attitude-motion information of the photographing device detected by an Inertial Measurement Unit (IMU).

40. The terminal device according to claim 34 or 35, wherein when determining the position-attitude-motion information of the photographing device relative to the marker, the one or more processors are configured to:
determine the position-attitude-motion information of the photographing device relative to the marker, according to the position-attitude-motion information of the marker in at least two image frames captured by the photographing device and the position-attitude-motion information of the photographing device detected by the IMU

41. The terminal device according to claim 40, wherein:
in response to an absolute value of a difference between the position-attitude-motion information of the photographing device determined according to the position-attitude-motion information of the marker in the at least two image frames captured by the photographing device and the position-attitude-motion information of the photographing device detected by the IMU is greater than a threshold, the one or more processors are configured to delete determined position-attitude-motion information of the photographing device relative to the marker.

42. The terminal device according to any one of claims 34-41, wherein when controlling the mobile object according to the position-attitude-motion information of the photographing device relative to the marker, the one or more processors are configured to at least one of:

control position-change information of the mobile object relative to a preset origin, according to the position-change information of the photographing device relative to the marker; or control attitude-change-information of the mobile object relative to the preset origin, according to the attitude-change information of the photographing device relative to the marker.

43. The terminal device according to any one of claims 25-42, wherein when obtaining the marker in the image captured by the photographing device, the one or more processors are configured to at least one of:

obtain the marker in the image captured by the photographing device that is selected by a user; obtain the marker in the image captured by the photographing device that matches a preset reference image; or obtain the marker in the image captured by the photographing device that is formed by a preset number of feature points.

44. The terminal device according to claim 43, wherein when obtaining the marker in the image captured by the photographing device that is selected by the user, the one or more processors are configured to at least one of:

obtain the marker selected by the user through drawing a box in the image captured by the photographing device; or obtain the marker selected by the user through clicking the image captured by the photographing device.

45. The terminal device according to any of claims 25-44, wherein before controlling the mobile object, the one or more processors are also configured to: obtain a trigger command for triggering a movement of the mobile device.

46. The terminal device according to claim 45, wherein the trigger command is generated by operating on a first activation button.

47. The terminal device according to any one of claims 25-44, wherein before determining the position-attitude information of the photographing device relative to the marker, the one or more processors are also configured to: obtain an initialization command, the initialization command being configured to initialize the determined position-attitude information of the photographing device relative to the marker.

48. The method according to claim 47, wherein the initialization command is generated by operating on a second activation button.

49. An unmanned aerial vehicle (UAV), comprising:

a fuselage;

a power system provided on the fuselage and configured to provide a power for flight; and an electronic governor communicatively connected to the power system and configured to control a flight of the UAV.

50. A system for controlling a mobile object, comprising:

the terminal device according to any one of claims 25-48; and a UAV.

| Obtain a marker in an image captured by a photographing device | S101 |
| --- | --- |

↓

| Determine position-attitude information of the photographing device relative to the marker | S102 |
| --- | --- |

↓

| Control the mobile object, according to the position-attitude information of the photographing device relative to the marker | S103 |
| --- | --- |

FIG. 1

21

23

22

20

FIG. 2

30

31

FIG. 3

30

31

FIG. 4

Obtain a marker in image(s) captured by the photographing device  $\sim$ S501

Determine position-attitude-motion information of the photographing device relative to the marker  $\sim$ S502

Control the mobile object, according to the position-attitude-motion information of the photographing device relative to the marker  $\sim$ S503

FIG. 5

Determine the position-attitude-motion information of the marker in at least two image frames captured by the photographing device  $\sim$ S601

Determine the position-attitude-motion information of the photographing device relative to the marker, according to the position-attitude-dynamic information of the marker in at least two image frames captured by the photographing device  $\sim$ S602

FIG. 6

20

70

FIG. 7

20

80

FIG. 8

FIG. 9

FIG. 10

Terminal device

One or more processors 111

110

FIG. 11

100

106

106

107 117 107

118

108 110

102

104

116

114 112

FIG. 12

## INTERNATIONAL SEARCH REPORT

| | International application No. |
|---|---|
| | PCT/CN2017/102081 |

### A. CLASSIFICATION OF SUBJECT MATTER

B64C 27/08 (2006.01) i; H04N 5/232 (2006.01) i

According to International Patent Classification (IPC) or to both national classification and IPC

### B. FIELDS SEARCHED

Minimum documentation searched (classification system followed by classification symbols)

B64C, H04N

Documentation searched other than minimum documentation to the extent that such documents are included in the fields searched

Electronic data base consulted during the international search (name of data base and, where practicable, search terms used)

CNABS; CNTXT; DWPI; SIPOABS; CNKI: 无人机, 旋翼飞行器, 跟踪, 追踪, 拍摄, 位置, 姿态, 控制, rotorcraft, UAV, aerial w vehicle, trace, track+, shoot+, posture, location, control

### C. DOCUMENTS CONSIDERED TO BE RELEVANT

| Category* | Citation of document, with indication, where appropriate, of the relevant passages | Relevant to claim No. |
|---|---|---|
| X | CN 205453893 U (SHENZHEN ORBBEC CO., LTD.) 10 August 2016 (10.08.2016), description, paragraphs [0030]-[0050], and figures 1-5 | 1-50 |
| A | US 2010253798 A1 (NIKON CORP.) 07 October 2010 (07.10.2010), entire document | 1-50 |
| A | CN 105120146 A (GDU TECHNOLOGY (SHENZHEN) CO., LTD.) 02 December 2015 (02.12.2015), entire document | 1-50 |
| A | CN 105487552 A (SHENZHEN AEE AVIATION TECHNOLOGY CO., LTD.) 13 April 2016 (13.04.2016), entire document | 1-50 |
| A | EP 2202671 A2 (CANON K.K.) 30 June 2010 (30.06.2010), entire document | 1-50 |
| A | US 2013107066 A1 (VENKATRAMAN SUBRAMANIAM et al.) 02 May 2013 (02.05.2013), entire document | 1-50 |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 06 June 2018 | 27 June 2018 |

| Name and mailing address of the ISA | Authorized officer |
|---|---|
| State Intellectual Property Office of the P. R. China<br>No. 6, Xitucheng Road, Jimenqiao<br>Haidian District, Beijing 100088, China<br>Facsimile No. (86-10) 62019451 | ZHANG, Rentian<br><br>Telephone No. (86-10) 62089855 |

Form PCT/ISA /210 (second sheet) (July 2009)

INTERNATIONAL SEARCH REPORT

Information on patent family members

International application No.

PCT/CN2017/102081

| Patent Documents referred in the Report | Publication Date | Patent Family | Publication Date |
|---|---|---|---|
| CN 205453893 U | 10 August 2016 | None | |
| US 2010253798 A1 | 07 October 2010 | JP 4678061 B2 | 27 April 2011 |
| | | JP 2010245658 A | 28 October 2010 |
| | | US 8243154 B2 | 14 August 2012 |
| CN 105120146 A | 02 December 2015 | WO 2017020856 A1 | 09 February 2017 |
| CN 105487552 A | 13 April 2016 | None | |
| EP 2202671 A2 | 30 June 2010 | US 2010166261 A1 | 01 July 2010 |
| | | US 8416987 B2 | 09 April 2013 |
| | | CN 101783019 B | 24 April 2013 |
| | | EP 2202671 A3 | 20 March 2013 |
| | | CN 101783019 A | 21 July 2010 |
| | | JP 2010157924 A | 15 July 2010 |
| | | JP 5219795 B2 | 26 June 2013 |
| US 2013107066 A1 | 02 May 2013 | WO 2013062742 A1 | 02 May 2013 |

Form PCT/ISA /210 (patent family annex) (July 2009)